# EUROPEAN PATENT APPLICATION

(11) **EP 0 847 705 A1**
(43) Date of publication of application: **17.06.1998**
(21) Application number: 97203594.3
(22) Date of filing: 18.11.1997
(51) Int. Cl.: A23N 12/02

(54) **Rinsing machine having a drum, comprising dirt-removing means**

(30) Priority: 19.11.1996 NL 1004569
(71) Applicant: Konstruktie- en Machinebouw van Dijke Zeeland B.V., 4675 PZ St. Philipsland (NL)
(72) Inventor: van Dijke, Dingeman, 4675 AZ St-Philipsland (NL)
(74) Representative: Smulders, Theodorus A.H.J., Ir.

(57) **Abstract**

Washing apparatus for bulbous and tuberous plants, comprising a water basin (1) and conveying means (5) for conveying the bulbous and tuberous plants through at least a portion of the water basin (1), which conveying means (5) are adapted for moving bulbs or tubers located thereon or therein relative to each other, wherein the conveying means (5) comprise a series of scraping means (9,9') which move relative to the conveying means (5) and, during use, are alternately contacted with tubers or bulbs located in or on the conveying means (5).

## Description

The invention relates to an apparatus according to the preamble of claim 1. Such apparatus is known from NL 94.01863.

To simplify the description, as bulbous and tuberous plants, beets will usually be mentioned, in particular sugar beets.

The known apparatus comprises a drum which is disposed in a basin and provided with a circumferential wall, and which is open at its two ends. The drum is rotatable within the basin about an approximately horizontal axis. The circumferential wall is provided with perforations so that water can pass through the circumferential wall while entraining for instance sand and like fouling particles from the inside of the drum to the outside, for discharge from the apparatus. During use, the bulbous and tuberous plants are dumped in fouled condition in the water in the basin, adjacent a first end of the drum. In this context, 'fouled' should be interpreted as for instance having mud, sand, loose parts such as stones and the like, sticking thereto. The loose, relatively heavy parts are segregated before the drum, the tubers or bulbs are fed into the drum, without filling the drum entirely, viewed in cross section. Due to the rotary motion of the drum, the tubers or bulbs are moved over each other through the water, causing dirt to be abraded from the tubers or bulbs as a result of the mutual friction. At the second end of the drum, the washed bulbs or tubers are removed from the basin. This involves the drum acting as a conveying means, with the flow of water through the basin in the direction of the second end, which flow is generated by pump means, partly providing conveyance of the bulbs or tubers.

This known apparatus has the advantage that in a suitable, relatively simple manner, there is obtained, due to the rotating action of the drum, an abrasive motion of the bulbs or tubers relative to each other, so that relatively loose fouling is removed. However, in the case of heavy fouling, for instance firm, fat clay or like strongly clinging fouling, which is hence difficult to remove, this cleaning action often turned out to be insufficient, particularly in the case of relatively heavy, large and/or irregularly shaped bulbs or tubers such as fodder beets and sugar beets and the like.

The object of the invention is to provide an apparatus of the type described in the preamble of the main claim, wherein the above-mentioned drawbacks are avoided and the advantages thereof are maintained.

To that end, a washing apparatus according to the invention is characterized by the features according to the characterizing part of claim 1.

During use, the scraping means, which move relative to the conveying means, are alternately brought into and out of contact with the bulbs or tubers located in the basin on or in the conveying means. As a result, a scraping action of the scraping means relative to the bulbs or tubers is obtained, causing them to be cleaned in a better manner than was formerly the case. Moreover, the bulbs or tubers are moved by the scraping means in a direction which includes an angle with the conveying direction of the conveying means, whereby a better, more intimate contact is obtained between the bulbs or tubers relative to each other and between the conveying means and the bulbs or tubers. In addition, the scraping means provide a further movement of the bulbs and tubers, in such a manner that the bulbs and tubers will move relative to each other in vertical direction in the water, thereby ensuring that all bulbs and tubers in the washing apparatus contact the scraping means at any moment. Thus, a washing apparatus according to the invention provides in a particularly simple and favorable manner a very good cleaning of bulbs and tubers dumped therein, also when they are fouled with pollutions which are particularly difficult to remove, such as clay.

In an advantageous embodiment, a washing apparatus according to the invention is characterized by the features of claim 2.

The elements driven for rotation offer the advantage that in a simple manner scraping elements can be obtained which can be alternately moved in the direction of or away from the bulbs or tubers on or in the conveying means. Moreover, owing to these rotating elements, the bulbs or tubers can independently be brought into a rotating movement or at least a like motion. Thus, an omnilateral contact of the bulbs or tubers with the scraping means is obtained.

The scraping means preferably comprise movable cam-shaped or brush-shaped elements. Such elements offer the advantage that they can easily provide sufficient force of impact and friction for loosening foulings and, moreover, generate sufficient motion of the bulbs or tubers.

In a preferred embodiment, an apparatus according to invention is characterized by the features of claim 5.

When a drum is used as co-conveying means, the use of scraping means in the wall of the drum offers the advantage that thus, new scraping means can in each case be brought into and out of contact with the bulbs or tubers in the drum in a particularly suitable manner. Because of the weight of the bulbs or tubers in the drum, they will be forced to move against each other and against the scraping means, which provides a highly intensive contact between the bulbs and tubers relative to each other or with the scraping means.

In a further embodiment, a washing apparatus according to the invention is further characterized by the features of claim 7.

The rollers provided with projections or brushes or like elements, which rollers are at least partly accommodated in the wall of the drum and arranged with their longitudinal axes approximately in the longitudinal direction of the drum, enable a particularly thorough and simple cleaning of the bulbs or tubers. During use, the cam-shaped elements are at least partially moved into and out of the drum. During the movement out of the drum, foulings are carried along from the inner space of the drum towards the outside, while moreover, the parts of the elements which project outside the drum are beyond the reach of the bulbs or tubers. Hence, the drum is designed for sieving and scraping simultaneously.

In an alternative embodiment, a washing apparatus according to the invention is characterized by the features of claim 11.

An inclined conveying face whereby a cleaning of the bulbs or tubers can be obtained by the water and the scraping means, and, simultaneously, a conveyance of the bulbs and tubers through at least a part of the basin and out of the basin, enables a simple operation of the apparatus, which can moreover be of a relatively compact design. On or above the part of the conveying face which extends into the water, flowing movements of the water and the bulbs or tubers contained therein are provided, whereby, because of the pressure of the bulbs or tubers, intimate contact is again provided between the bulbs or tubers relative to each other or with the scraping means in the conveying face. The movements of the bulbs or tubers on or above the conveying face will largely be comparable with the movements of the bulbs or tubers in the drum described hereinabove. A conveying face according to the invention can be constructed and used in a relatively simple, compact and cheap manner. Moreover, the conveying face provides a positively controlled conveyance of the bulbs or tubers from the basin.

In a further preferred embodiment, a washing apparatus according to the invention is characterized by the features of claim 13.

The linear movement of the rollers, approximately at right angles to their longitudinal direction, provides a further component of movement for the bulbs or tubers, so that an even more intensive contact between the bulbs or tubers relative to each other or with the scraping means is obtained. Moreover, this linear movement provides a movement of the bulbs or tubers in the conveying direction or, optionally, opposite thereto. Hence, by means of the moving rollers, the bulbs or tubers can be moved from the basin in a accelerated or decelerated manner.

The invention moreover relates to a method for cleaning bulbs or tubers, in particular beets such as sugar beets or fodder beets or the like, which method is characterized by the features of claim 14.

With such method, bulbs or tubers can be cleaned in a particular simple and thorough manner, in particular they can be freed from foulings that are connected thereto relatively fixedly, such as clay, soil, mud, stones and the like.

To clarify the invention, exemplary embodiments of a washing apparatus according to the invention will be described hereinafter, with reference to the accompanying drawings. In these drawings:
Fig. 1 is a side elevational view of a washing apparatus according to the invention in a first embodiment;
Fig. 2 is a sectional view of a washing apparatus taken on the line II-II in Fig. 1;
Fig. 3 is a side elevational view of a drum for an apparatus according to Figs. 1 and 2;
Fig. 4 is a sectional side elevational view of a washing apparatus in a second embodiment;
Fig. 5 is a sectional side elevational view of a washing apparatus in a third embodiment;
Fig. 6 is a star roller for use in a washing apparatus according to the invention; and
Fig. 6A is a side elevational view of a segment of a star roller according to Fig. 6.

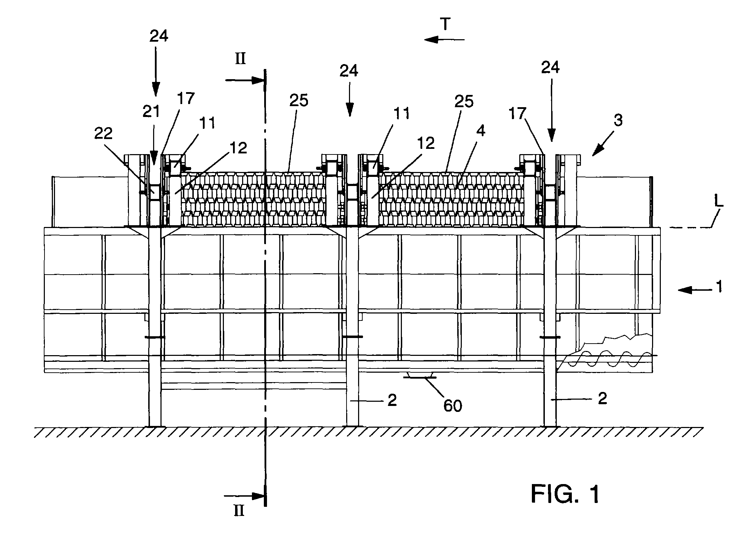

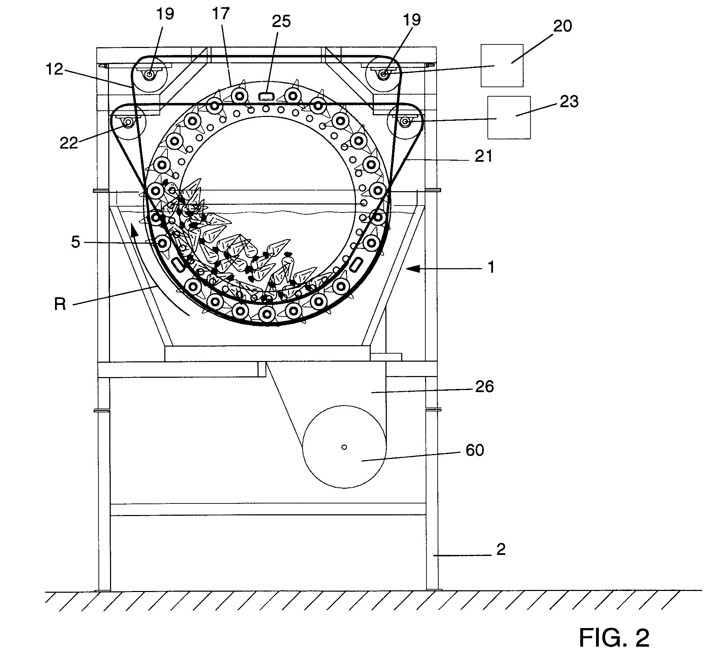

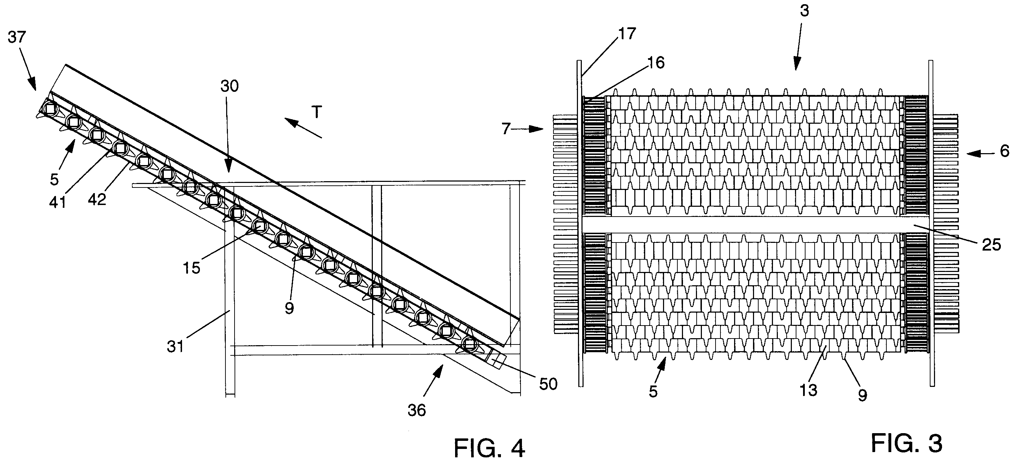

Figs. 1 and 2 show a basin 1, supported by a series of legs 2, in which basin 1 water can be circulated. Disposed in the basin 1 is a drum 3 which can be driven for rotation about its approximately horizontal longitudinal axis L, via means that will be described in more detail hereinbelow. The drum 3 (Fig. 3) has a longitudinal wall 4 which is substantially built up from a number of rollers 5 extending in the longitudinal direction of the drum 3, which will be discussed in more detail hereinbelow. The front end 6 and the rear end 7 of the drum 3 are open. For about half its height, the drum 3 is submerged in the basin 3, in particular in the water included therein.

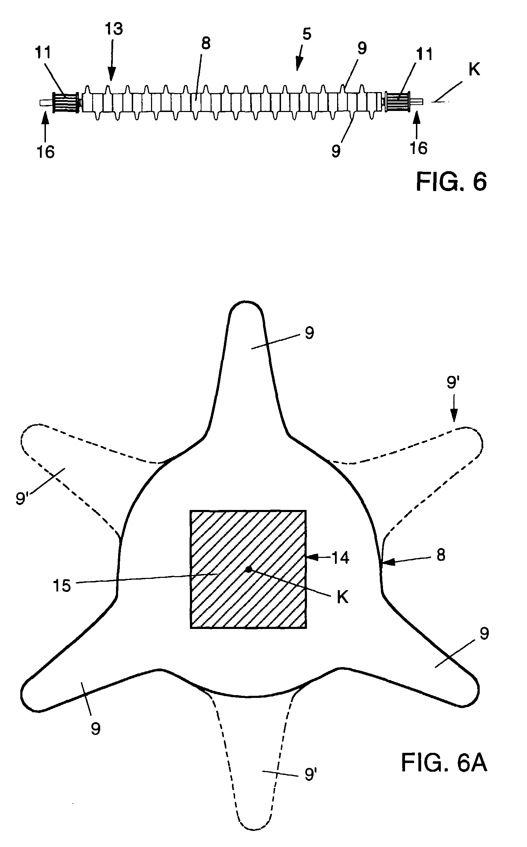

Each roller 5 (Fig. 6) is designed as a star roller or a like profiled roller. This means that each roller 5 comprises fingers or projections 9 extending from the surface 8 of the roller 5, for instance always three in each sectional plane, shifted 120° relative to each other. Each group of three projections 9 has been rotated through an angle of 60 degrees relative to the adjoining groups of three projections 9', resulting in a staggered pattern of projections 9. Provided at the two ends of the roller 5 is a gear 11 capable of cooperating with a toothed belt 12 in the drive means for the drum 3 and the rollers 5, and a bearing 16 as will be described in more detail hereinbelow.

In the exemplary embodiment shown (Fig. 6), each roller is built up of a series of identical or at least comparable segments 13, each comprising a group of three projections 9 as mentioned hereinabove. Each segment 13 is provided with a square central hole 14 (Fig. 6A) into which a central, fitting rod 15 can be inserted. The central hole 14 of each segment is rotated through 60 degrees, as mentioned hereinabove, relative to the central hole 14 of the adjoining segments, so that when the segments 13 are slid onto the rod 15, the staggered position of the projections 9 is obtained. As the hole 14 of each segment is square, at least other than circular, the segments 13 cannot rotate relative to the rod 15, so that rotation of the rod 15 about its longitudinal axis K causes the segments to be rotated as well. The segments 13 are preferably manufactured from rubber or plastic. As a result, a scraping movement is in fact obtained during use, while the tubers or bulbs themselves are not damaged.

Via bearings 16 on either side adjacent the gears 11, the rollers 5 are mounted in a circular supporting ring 17, with the rollers 5 being parallel to each other in such a manner that the projections 9 can approximately move between each other. The supporting rings 17 on either side of the drum 3 are interconnected by a series of connecting beams 25 to obtain a relatively rigid drum 3. Preferably, the path of movement of the ends of the projections 9 always approximately abuts against the surface 8 between the projections 9 of the adjoining rollers 5. Through variation of this distance and/or the change of the height of the projections 9 and/or the intermediate distance thereof, the size of the passage of the wall of the drum 3 can be set. That is to say, it can thereby be determined how large the parts are which can leave the wall of the drum 3 between the rollers 5 and projections 9. Hence, the spaces between the projections 9 and rollers 5 constitute an equivalent of the perforations of the known apparatus.

Above the basin 1 and adjacent each supporting ring 17, two first guide wheels 19 for the toothed belt 12 are provided, spaced from the drum 3, approximately on the vertical tangent line on both sides of the drum 3. At least one of the guide wheels 19 is drivable by means of a first drive motor 20. Each supporting ring 17 is moreover provided with a toothed edge over which a second toothed belt 21 is passed. Via one of the two second guide wheels 22 disposed above the drum 3, this second toothed belt 21 is drivable by a second drive motor 23. The teeth on the supporting ring 17 can for instance be pins welded thereon. In the exemplary embodiment shown (Fig. 1), two drums 3 are connected in series, with the arrangement of three guide and drive assemblies 24. Each drive assembly 24 comprises two first toothed belts 12 and one second toothed belt 21, with the associated drive and guide means.

During use, the drum 3 can be driven as a whole in a rotational sense by the second drive motors 23, at a suitable speed. Through the arrangement of the first guide wheels 19 relative to the drum 3, the bottom portion of each first toothed belt 12 abuts against the relevant gears 11 of the rollers 5 which at that moment are situated in the bottom part of the drum 3. This means that in each case only the rollers 5 in the bottom half, at least the bottom part of the drum 3, are driven. The rollers 5 situated in the top portion of the drum 3 are out of engagement with the belts 12, as a result of which the rollers 5 which lead in the rotational direction of the drum 3 are in each case suddenly brought into engagement with the belts 12 and hence driven in rotational sense.

The first drive belts 12 are always driven by the first drive motor 20. Through a suitable choice of the drive speed of the first drive motor 20 relative to the drive speed of the second drive motor 23, the rotational speed of at least the driven rollers 5 can be set. In this manner, an optimum can in each case be set for the rotation of the drum about its own axis L in the direction of the arrow R in Fig. 2 and for the rotation of the rollers 5 about their own axes, relative to each other. In this manner, the rollers 5 can rotate in the same direction as the drum 3 or, by contrast, in opposite direction. At a particular choice of drive speeds of the motors 20, 23, the driven rollers will momentarily be stationary relative to the drum.

During use, bulbs or tubers such as sugar beets with dirt clinging thereto are dumped into the basin 1 adjacent a first end. By the flowing water, the movements of the drum 3 and the pressing force of the sugar beets fed, the sugar beets are forced via the first end 6 into the drum 3 and, in the drum, come into contact with the wall of the drum 3, more in particular with the rollers 5. The drum 3 and the rollers 5 are driven, causing the projections 9 to strike the sugar beets and move beyond them to a position outside the drum 3 and, subsequently, back into the drum 3 again, contacting other sugar beets. Due to movements of the sugar beets, the movements of the drum 3 and the movements of the rollers 5, the sugar beets will be moved relative to each other. This produces an abrading movement of the sugar beets against each other and against the rollers 5, while the projections 9 each time knock dirt from the sugar beets and, as they move to the outside of the drum 3, carry the dirt outside the drum 3, above the gutter 26. Moreover, the weight of the sugar beets and the filling degree of the drum will effect that the sugar beets are pressed against the rollers 5 and will slightly move along in the direction of movement of the drum 3. When falling back, the sugar beets from the bottom layer will then be moved on top, while other sugar beets are moved in the direction of the rollers 5. As a consequence, different sugar beets will each time be moved to different positions and touched by the moving projections 9. In this manner, a highly thorough cleaning of the sugar beets is obtained, without damaging the sugar beets.

The apparatus further comprises water level regulating means 29. By these means, more or less water can be introduced into the basin 1, whereby the pressure of the sugar beets against the drum 3, at least against the rollers 5, can be set. Indeed, the more water is introduced into the basin 1, the more beets will start to float and the lower the pressure on the bottom sugar beets. The lower the pressure, the smaller the risk of damage to the sugar beets by the projections 9 and the less the cleaning action thereof. In each case, an optimum can be set.

Fig. 4 shows an alternative embodiment of a washing apparatus according to the invention, wherein a series of rollers 5 (Fig. 6, 6A) are arranged so as to be parallel to each other, to form an approximately flat conveying face 30. The conveying face 30 is inclined in such manner that a first end 36 is located in the basin 31 under water and the second, upper end 37 is located outside the basin 31 above the water level. The rollers 5 can be driven by a toothed belt 42 of appropriate length, which toothed belt extends along the gears 41 and is drivable by a drive motor 50. Thus, during use, the rollers 5 are driven in rotational sense. When the sugar beets are dumped into the basin, they are urged in the direction of the conveying face 30 by the thrust of the water and the other sugar beets. Contact between the sugar beets and the driven rollers 5 will cause the sugar beets to move relative to each other and to the conveying face, whereby subjacent sugar beets are for instance forced upwards or sidewards and superjacent sugar beets are forced downwards. As a result, in a manner comparable with the above-described manner, the sugar beets are cleaned particularly thoroughly and rapidly, while moreover, by the rollers 5, the sugar beets are accelerated or, by contrast, braked in their speed of movement through the basin 31, depending on the set speed and direction of rotation. The cleaned sugar beets are eventually moved out of the basin across the conveying face 30, while leaving behind the water and dirt.

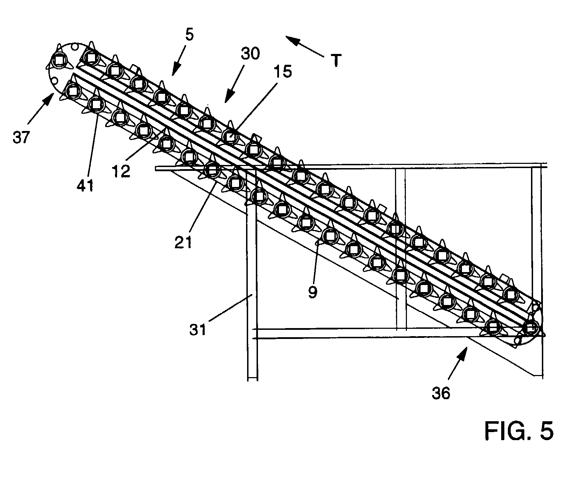

Fig. 5 shows a second alternative embodiment of a washing apparatus according to the invention, comparable with the apparatus as shown in Fig. 3, but wherein, during use, the rollers 5 have, in addition to a rotating movement about their own longitudinal axes K, a linear movement component, at right angles to their longitudinal direction and approximately parallel to the conveying face 30. To that end, the rollers are incorporated into a drive assembly comparable with the first 12 and second toothed belts 21 and first 20 and second drive motors 23. The first toothed belt 21 provides rotation of the rollers 5 about their own axes, the second toothed belt 21 provides movement of the rollers 5 in linear direction. Thus, the rollers 5 at the upper side move in a first direction, for instance in the direction of the top second end of the conveying face, and at the lower side move in opposite direction. In this manner, the movements of the sugar beets relative to each other and the apparatus can be controlled even more effectively.

A washing apparatus according to the invention preferably comprises means for recirculating water within the basin, with sand-separating means being included for removing the dirt from the water, while the water stays behind in the basin. To that end, the basin can for instance comprise sand-separating means 60 as described in NL 9301204, incorporated herein by reference. An apparatus according to the invention can then for instance be included between a rinsing zone and a receiving zone. In the receiving zone, at least connecting to the drum or the conveying face, an inclined conveying belt can be accommodated at that location for discharging bulbs or tubers. Before the drum or the conveying face, auger means can be accommodated for discharging and/or forcing the bulbs or tubers.

Along the bottom side of the basin 1, there is preferably provided a gutter 26, in which conveying augers 27 are included for conveying dirt. Provided in a central area are the above-mentioned sand-separating means 60. The conveying direction of the augers 27 is always in the direction of the sand-separating means 60. In this manner, with the apparatus, relatively little water is sufficient.

The further apparatus may for instance be designed as, or at least contain parts of an apparatus as described in NL 9401863, NL 9301204 and/or NL 8801353.

The invention is by no means limited to the embodiments represented in the description and the drawings. Many variations thereto are possible.

For instance, the rollers may be constructed in a different manner, for instance in one piece or having more or fewer projections or like elements. Moreover, the projections may be designed differently, for instance as brushes. Further, different drive means may be provided for the rollers and the scraping means may be designed differently, for instance entirely or partly as brushes or the like which move back and forth relative to, for instance, a drum wall or conveying face. Also, a number of the rollers may for instance be of smooth design. Further, all types of means may be used for moving the bulbs or tubers through the basin. Several drums or conveying faces may be connected in series or be mutually combined. A washing apparatus according to the invention may moreover be of mobile design, enabling it to be positioned and employed at the location where the bulbs or tubers are lifted, while the separated dirt can directly be dumped back onto the land.

These and many other modifications are understood to fall within the framework of the invention.

## Claims

1. A washing apparatus for bulbous and tuberous plants, comprising a water basin and conveying means for conveying the bulbous and tuberous plants through at least a portion of the water basin, said conveying means being adapted for moving bulbs or tubers located thereon or therein relative to each other, **characterized in that** the conveying means comprise a series of scraping means which move relative to the conveying means and, during use, are alternately contacted with tubers or bulbs located in or on the conveying means.

2. A washing apparatus according to claim 1, characterized in that the scraping means comprise elements driven for rotation.

3. A washing apparatus according to claim 1 or 2, characterized in that the scraping means comprise cam-shaped or brush-shaped projections that are moved relative to the conveying direction of the conveying means, so that the cam-shaped or brush-shaped elements are moved relative to each other and the bulbs or tubers.

4. A washing apparatus according to claims 2 and 3, characterized in that the scraping means comprise a series of rollers drivable for rotation, wherein the rollers have their outer surfaces provided with projections or brushes.

5. A washing apparatus according to any one of the preceding claims, wherein the conveying means comprise a drum partially extending into the basin, said drum being rotatable about its longitudinal axis and being substantially open at its two ends, characterized in that the scraping means are at least partially incorporated into the wall of the drum.

6. A washing apparatus according to claim 5, characterized in that the scraping means comprise moving elements which move relative to the wall of the drum in a direction substantially at right angles to the conveying direction of the conveying means.

7. A washing apparatus according to claim 4 and claim 5 or 6, characterized in that the rollers substantially extend in the longitudinal direction of the drum, parallel to the conveying direction, wherein the projections or brushes, during rotation of the rollers, are alternately moved into and out of the drum.

8. A washing apparatus according to claim 7, characterized in that on the outside of the drum, means are provided for driving the rollers, said means being adapted for at least driving, during use, the rollers which are located in the water in the basin.

9. A washing apparatus according to claim 8, characterized in that the drive means are adapted for controlling the rotational speed of the rollers.

10. A washing apparatus according to any one of claims 5-9, characterized in that a number of drums within the basin can be coupled.

11. A washing apparatus according to any one of claims 1-4, characterized in that the conveying means comprise a conveying face which extends in an inclined manner, wherein an end of the conveying face which leads in conveying direction is located in the basin under water and the opposite end extends outside the basin above the water level, wherein the scraping means are at least partially incorporated into the conveying face.

12. A washing apparatus according to claims 4 and 11, characterized in that the rollers extend substantially transversely to the conveying direction, wherein the brushes or projections, during rotation of the rollers, are alternately moved above and below the conveying face.

13. A washing apparatus according to claim 12, characterized in that the rollers are included in a circulating, endless belt, wherein, during use, the rollers are moved at right angles to their longitudinal axes and rotated about their longitudinal axes.

14. A method for cleaning bulbs or tubers, in particular beets and the like, utilizing a washing apparatus according to any one of the preceding claims, characterized in that adjacent a first end, the bulbs or tubers are dumped in the basin in the water contained therein, whereafter the bulbs or tubers are moved through the basin in the direction of the second end, wherein the conveying means and the scraping means provide movement of the bulbs and tubers in the conveying direction and in a direction which includes an angle with the conveying means, in such a manner that during use, all bulbs or tubers are alternately brought into and out of contact with the scraping means, so that cleaning of the bulbs or tubers is obtained through soaking off by the water, through friction between the bulbs or tubers relative to each other, and through friction between the bulbs or tubers and the scraping means.
